# EUROPEAN PATENT APPLICATION

(11) **EP 1 359 728 A2**
(43) Date of publication of application: **05.11.2003**
(21) Application number: 03252785.5
(22) Date of filing: 02.05.2003
(51) Int. Cl.: H04L 29/06

(54) **Secure data delivery**

(30) Priority: 04.05.2002 GB 0210325
(71) Applicant: Foldermail Ltd., Cambridge CB3 0DL (GB)
(72) Inventor: Aldridge, Jane, Cambridge CB4 0DL (GB); Gaffney, Philip, Cambridge CB4 0DL (GB)
(74) Representative: Finnie, Peter John

(57) **Abstract**

The invention relates to secure delivery of data over communications networks, and in particular to the secure delivery of large datasets.

One aspect of the invention is the preparation of a dataset (1) for secure transmission comprising the steps of scrambling the data set according to a first key (22) splitting the dataset into blocks (14-19) and ordering the blocks according to a second key (23). The dataset can then be split and stored between a plurality of servers on the network.

Another aspect of the invention is the secure download of blocks of data over a communications network comprising the steps of downloading blocks to a client device in an apparently random order according to a download key or keys, independently sending the key or keys to the client device and reordering the blocks in accordance with the key or keys.

## Description

### Background to the Invention

Transferring large datasets across IP networks can be fraught with problems: It can prevent normal network traffic reaching its destination on time, it can tie up a user's PC and prevent him or her from working, it can even halt the network so that it requires engineer intervention. Alternately, the transfer can simply fail part way through. If data are sensitive or confidential, transfer cannot be in the open, and it is also desirable for data to remain locked before and / or after delivery to prevent unauthorised access. For this reason, leased lines are often set up at high cost to transfer data between two points as the public internet is considered too insecure.

On the other hand, the unauthorised distribution of copyright material across the internet is a major problem in a number of industries including the software and music industries where billions of dollars in revenue are lost each year through piracy. Digital Rights Management solutions are needed that prevent unauthorised access and copying of media.

Delivery of data across electronic networks and particularly the internet remains attractive because when it works properly it is much faster, cheaper and more convenient than distribution of physical media. More and more data will migrate to internet delivery with time,

This invention provides a low cost and highly effective solution to the problems of reliable transfer of large datasets across networks. For example, it enables broadcast quality video to be delivered over the internet at a fraction of the cost of streaming per megabyte. The invention also provides a delivery method that can be incorporated into a solution to the problems of ensuring data security and digital rights protection and management.

### Summary of the Invention

According to a first aspect of the present invention, a method of preparing a dataset for secure transmission over a communications network comprises the steps of scrambling the dataset according to a first key, splitting the dataset into a plurality of blocks and ordering the blocks according to a second key.

According a second aspect of the invention, a computer program product comprises computer program code means adapted to perform all of the steps of the method of the first aspect.

According to a third aspect of the invention, a system for preparing a dataset for secure transmission over a communications network, comprises means for scrambling the dataset according to a first key, means for splitting the dataset into a plurality of blocks and means for uploading the blocks in a different order according to a second key.

According to a fourth aspect of the invention, a method of transferring a dataset, comprising a plurality of blocks of data, across a communications network from one or more servers to a client device, comprises the steps of downloading the blocks to the client device in an order according to a download key or keys, independently sending the download key or keys to the client device and reordering the blocks in accordance with the key or keys.

Preferably, the dataset is prepared according to the method of the first aspect of the invention, further comprising the step of unscrambling the data in accordance with the first and second keys.

According to a fifth aspect of the present invention, a computer program product comprises computer program code means adapted to perform all of the steps of the method of the fifth aspect of the invention when said program is run on a computer network.

According to a sixth aspect of the present invention, a system for transferring a dataset, comprising a plurality of blocks of data across a communications network from one or more servers to a client device, comprises means for downloading the blocks to the client device in an order according to a download key or keys, means for independently sending the download key or keys to the client device and means for reordering the blocks in accordance with the key or keys.

According to a seventh aspect of the present invention, an encrypted dataset derived from an original dataset comprises a plurality of blocks of data ordered according to a second key, wherein each block contains data from the original dataset in accordance with a first key.

The present invention enables storage and transfer of large datasets with high security across existing networks, including the public internet. Security is achieved through two steps. In the first aspect, data to be transferred are obscured by scrambling the datasets, and then splitting them into virtually unidentifiable file segments of uniform size and characteristics. Segment files for the datasets can then be placed on the network, such as the public internet. Each file segment is virtually indistinguishable from the next. The problem this poses to the unauthorised person aiming to gain access to the data is analogous to searching for a needle in a haystack.

In a further aspect, the recipient collects data segments that make up a data set. The recipient scrambles or encrypts the data as it is collected according to instructions or key received from a system manager. Each recipient can encrypt the data uniquely because each recipient may be provided with a different set of instructions to other recipients. Thus, all recipients can have unique copies of the data. Access to the data is provided using key technology, where keys can be linked to distinctive features of the recipient's hardware or user identification information. Thus, media can be locked to the hardware device on which its playing is authorised.

The data transfer process is self-managed and need not interfere with other network traffic or other work the user is doing on the recipient device, rather it allows time periods when the network is slack to be exploited. It also enables mechanisms for managing digital rights.

In many applications the invention solves the problem of the last mile, for example, it enables delivery of TV programmes with broadcast quality video over 56K modem, and it will work well over low quality networks suffering repeated disconnections.

The invention will work with standard IP systems, and much existing infrastructure, keeping the investment required for its implementation to a minimum.

There are many applications for the present invention.

E-mails with large attachments will simply not transmit in many circumstances, and may even cause the mail server to crash. The invention provides a convenient and secure solution, making it possible to send confidential e-mails with attachments whose size is only limited by the capacity of the recipient's hard drive. The invention described here may be used in conjunction with the method described in Patent Application No. PCT/GB01/04239 for large attachment e-mails.

The invention also has applications in marketing and corporate communications. It enables compelling material of any file type, which can include broadcast quality video, to be transferred with high security to the computers of customers, leads, prospects, investors, staff, collaborators, press, distributors and agents, partners or other third parties. This material will launch and run instantly-access is even faster than from CD, let alone across the intemet. These communications are kept up to date by invisibly transferring updates as they occur from the publisher's master to all user copies to ensure data are synchronised.

The invention may be used as a fulfilment method for orders that are placed using the method described in patent application number GB0113698.5. This application describes a product and techniques for associating a unique product or service key with a product or advertisement that can be captured by various means (e.g. a mobile computing device or mobile phone) and transmitted on to a central agency for fulfilment of the information request or order.

Software piracy is a major problem, reducing the earnings of software manufacturers by up to 50%. The invention provides digital rights management (DRM) solutions that not only protect copyright, they also increase profit margins by providing a mechanism for direct distribution of software from producer to customer over the internet. Each user receives their software in a unique format that will neither install nor execute other than on the right hardware device and / or in the presence of the correct security keys.

The invention provides a low cost solution requiring minimal investment for distribution of media using the public internet. It enables direct distribution by media owners, and makes it economical to exploit media in small volumes. It is an ideal solution for exploiting archive material.

Broadcast quality video and other media can be delivered across IP networks with protection of digital rights. Each user receives a different version of the media that can only be played on the correct hardware device using a special player and is never revealed in native format. Access to media can be controlled to ensure payment is received, or to restrict number of times the content may be played or the duration of availability. The invention may be used as the delivery system needed to implement the inventions described in patent applications numbers GB0031663.8 and GB0119427.3.

The invention enables large volumes of data to be transferred with high security across any IP connection, including the public internet. It is indifferent to file type, and preserves data structure. Updates and deletions are supported; for updates only the difference between the old and new versions is transferred.

The invention also provides a digital rights management (DRM) method for media distributed on CD or other physical digital storage device.

The present invention makes transferring large datasets as easy and convenient as possible for the user. Transfers happen in the background and require no supervision. The mechanism is designed to be low priority and to suspend transfer if either the network or the PC becomes busy, so that it does not interfere with normal use of either, alternately, it can be set to high priority in which case transfer will take place at the maximum rate possible given the network and sender and recipient devices.

If the connection is poor and suffers from repeated interruptions, few data are lost. The system will automatically reconnect and continue to transfer data - again no user intervention is required.

If the transfer system is implemented on an IP network using standard HTTP protocols it can be made to work across most firewalls that the user is authorised to cross for browsing without intervention from IT personnel.

If the user has multiple datasets to transfer, he or she can specify the order in which they are passed.

The invention provides a highly secure data transfer mechanism that can be used on the public intemet without revealing the data. The security is due to several factors some of which are preferred features of the invention:
- Data placed on the network is obscured in a way that makes it very difficult to reconstruct without using the correct protocols. This makes it possible to use the public internet without compromising security in applications where leased line would be considered the only option.
- Each time a dataset is transferred to a different user it may have a unique format.
- Each unique delivery may be locked to the individual recipient and / or to the hardware device to which it is sent.
- Datasets can be split across multiple servers so no one server contains all the data required to reconstruct the dataset.
- A full audit trail can be generated, both on the server and on the individual Client Devices.
- Once on the end-user's PC, the data may be stored in obscured format so that it is not accessible to unauthorised users.
- User authentication and key handling can be implemented with up to world class technology according to the specific security requirements. The core technology has been designed in a modular format so that varying levels of security may be implemented and to allow the purchaser to build in custom functions for, say, user authentication.

### Brief Description of the Drawings

Examples of the present invention will now be described with reference to the accompanying illustrations in which:
Figure 1 is a block diagram illustrating a typical network configuration;
Figure 2 illustrates a method for obscuring data;
Figure 3 illustrates a method for publishing obscured data; and,
Figure 4 illustrates a method by which a recipient collects data.

### Detailed description

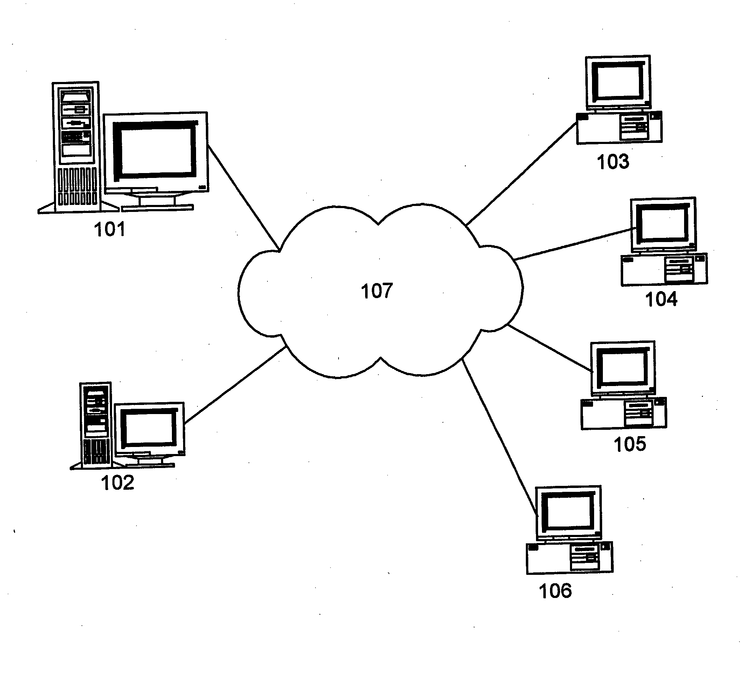

Figure 1 is a block diagram showing a typical network configuration. Each device is connected to a network 107 which may be the internet or another IP network or other network. Each end-user or Client Device, 103, 104, 105, 106 which may be a personal computer (IBM compatible or otherwise), mobile phone or other mobile device or other device capable of being attached to the network, has a software application, called the Client Software, running that may be configured either to send data, publish data or receive data or any combination of these three. The Client Software may provide user and / or device authentication functions either through communication with a management server or standalone. Another function that the Client Software may perform is to profile the Client Device on which it is running to provide data that either uniquely identifies the Client Device or that has a reasonable statistical probability of uniqueness. This may be performed directly by, for example, reporting the serial number of a hard drive or network card. Alternately, an algorithm may be run against some unique identification data to produce a result that is also reasonably unique to the device, and this result is then used as the identifier, because running the algorithm on the same device will yield the same result, but a different result if run on another device. A further function which the Client Software may perform is to collaborate with the management server(s) 101 to create full audit logs both on the Client Device and on the Management Server. Audit logs enable recipient, sender and network manager to maintain relevant records about all data that is transferred using this invention. The implementation of the above will be obvious to a person skilled in the art.

Although four Client Devices are shown connected to the network, there is no limit imposed by the invention on the number of Client Devices which may be connected to the network.

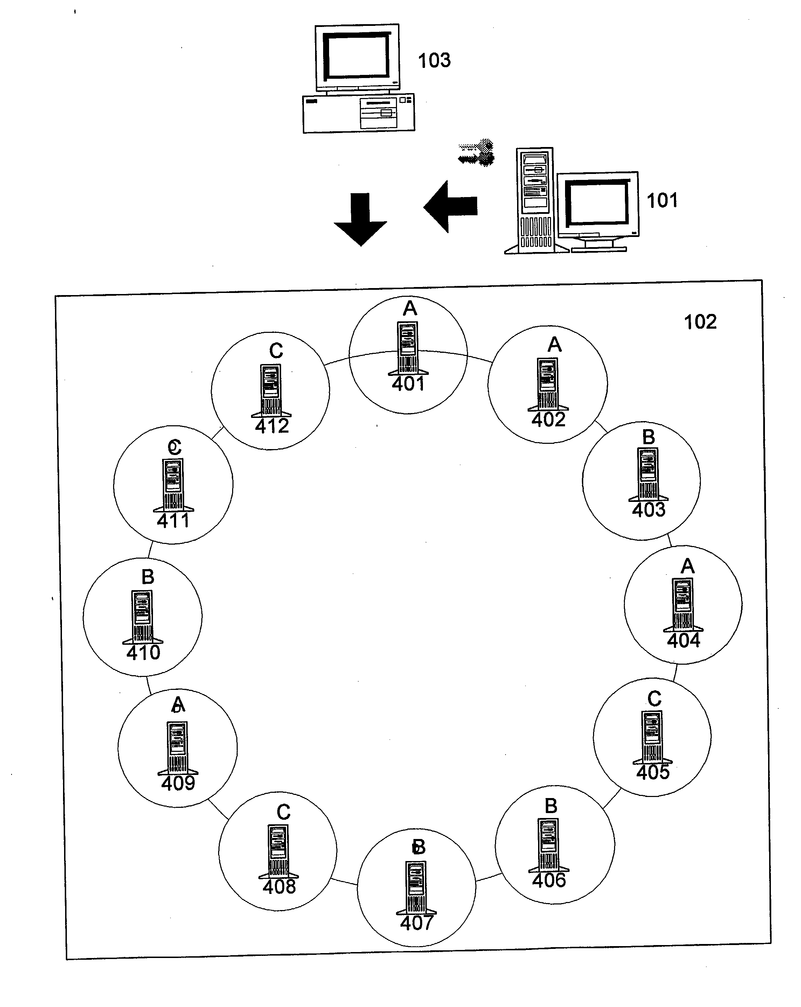

Content is served from one or more content servers, shown as a single server 102 in Figure 1. In the implementation instance described here in which the network is an IP network supporting HTTP protocols, content servers are standard web servers and need only have the functionality of serving web pages. This has the benefit that data may be served at very low cost. Although only one content server is shown, content may be split across multiple content servers and each data element may also be backed up on additional servers. Figure 3 illustrates a network of content servers where 102 is comprised of servers 401 to 412.

System management functions are executed on the management server 101 and include user and / or device validation and authorisation, version management, key handling, user management, content management and network management. Although the management server 101 has been represented as a single machine, these functions may be split across multiple servers for security or consolidated on one server. For example, key management may be performed by a specialised high security key server. All server functions represented on servers 101 and 102 may also be replicated across multiple servers and networks for resilience. Moreover, content may be served from the management server in small systems, so the whole invention may be implemented using a single server. This will be obvious to a person skilled in the art.

The content being transferred may be directory structures and / or files of any type or format including for example documents, e-mails, images, video, audio, software. The Client Software may also be programmed to provide feedback from the recipient of the information showing, for example, which parts of a document have been read and how long was spent reading each page or the results of a test.

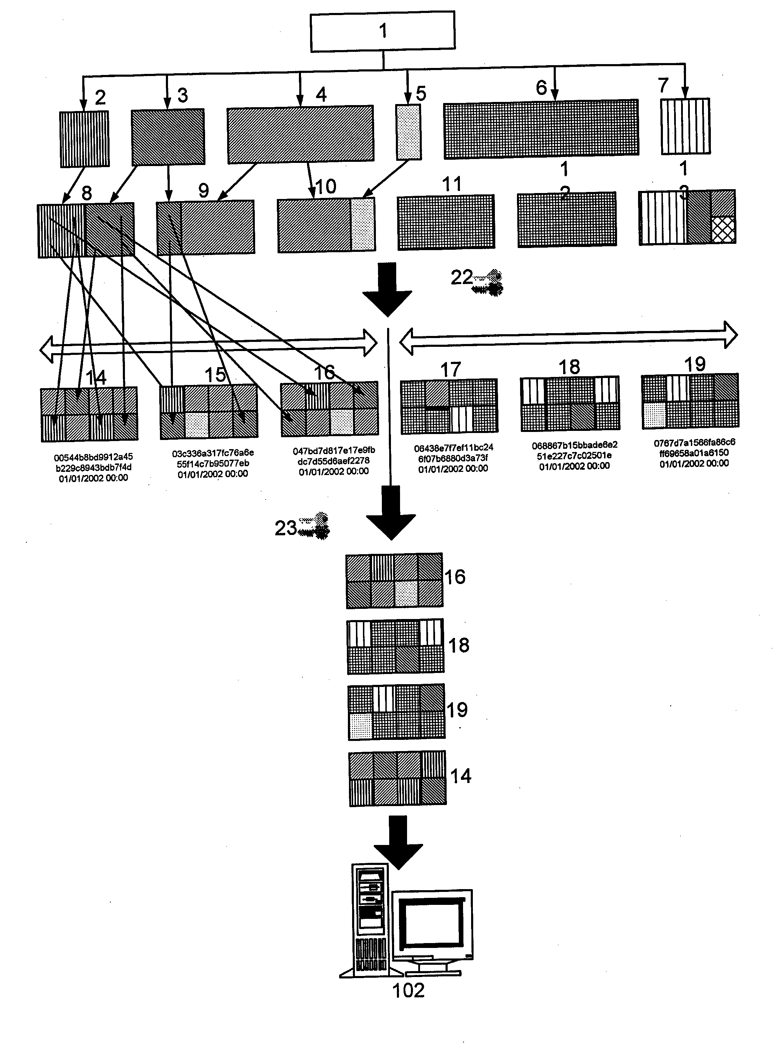

Figure 2 illustrates how data may be prepared for secure transmission through an obscuring process that provides security. This process may be undertaken by a user device or a server, depending upon the configuration of the system. For example, end-user Client Devices 103, 104, 105, 106 which are directly connected to the internet may run this process locally so that data are obscured and therefore secure at the earliest possible step in the process. Within a corporate network, the data may be transferred from the device where it originated to a nominated server (101 in Figure 1) or other device where the process is undertaken. In this instance, there may be less need to secure data while it is still within the relatively secure environment of the corporate network.

A source directory 1 is comprised of elements, which may be files or subdirectories, 2, 3, 4, 5, 6 and 7.

Initially, the source directory 1 is characterised to produce a full description 20 from which the directory structure may be fully reconstructed. This description, which may be in XML as illustrated in Figure 2, includes at least the following information: each directory is described to detail all files and directories within it such that the source directory structure is defined adequately to enable the construction of a new empty directory with the same structure. Additionally for each file, the description may include any additional details about each file, including but not limited to audit information such as creation and modification dates, author. The implementation of this aspect of the illustration will be obvious to a person skilled in the art.

The individual files 2 - 7 are then placed end on end in a large data-block. The order of the files in the data-block may be any order. This data-block may have had additional data added to it at any place or places at either end or in the middle of the data-block. The positions of added data may or may not be determined by the positions of the files within the data-block. The description of the source directory 1 is augmented so that the description of each file includes information that unambiguously describes how to extract it from the resulting data-block. An example of a description of a source directory is shown in Appendix 1.

The data-block may be scrambled according to an algorithm which may be defined mathematically and / or security key(s) 22. The key(s) 22 may be defined on the device performing the scrambling or transferred from a management server 101 which may be a specialised high security key server. If the key is transferred from a remote device it may be transferred using HTTPS protocols or other secure protocols which may involve encryption.

The scrambling algorithm may require the data to be split into blocks of equal, possibly predetermined, length prior to scrambling. If the data are not split into segments before or during the scrambling process, the data may be split into multiple segments of equal length at the end of the scrambling process.

There is much prior art which may be described as 'scrambling'. Likewise, there is much prior art in key handling. This invention may be used with any appropriate mechanism for data scrambling and key handling. This will be obvious to a person skilled in the art.

In the instance shown in the illustration in Figure 2, the data-block is split ('sliced') into segments of equal length. Where the last segment of a data-block is shorter than the other segments, data may be taken at random from other files to make the last segment up to the same length as the other segments. The resulting segments are illustrated as components 8, 9, 10, 11, 12 and 13. The diagram illustrates how this process could convert the original data source 1 comprised of files and subdirectories 2 - 7 into segments of fixed length 8 - 13. The last segment 13 includes 'packing data' to make it up to the same size as the other segments. This packing data may include data already in segment 13, data from other segments, data from other files not included in the data source 1, randomly generated data or other data. At this point, the description of the data set 20 is augmented to include information that defines how each file may be extracted from the dataset.

Adjacent segments may be then grouped in multiples of n (n=3 in the example in Figure 2) where n is less than or equal to the total number of segments. In case the number of segments is not an integer multiple of n, segments may be replicated at either end of or within the data-blocks to ensure that the number of segments is an integer multiple of n. Alternately, new data segments may be created using data either included or not included in the dataset or both. The data in each group of n adjacent segments may then be 'scrambled' resulting in segments 14 - 19 of equal length, which may be the same length as the original segments. Thus segments 14, 15 and 16 are the result of scrambling segments 8, 9 and 10, and segments 17, 18 and 19 are the result of scrambling segments 11,12, and 13. Each one of the new segments 14, 15 and 16 includes data from all of the segments 8, 9 and 10 in a way that ensures that it is not obvious how to recreate the original data set. 'Scrambling' may involve any process which obscures data, including but not limited to encryption, byte shuffling, byte and / or bit rotation.

It may be advantageous to set the length of segments 14 - 19 at a power of 2. This may result in best efficiency in storing data on the recipient's storage device as common storage units store data in binary format.

The advantage of this method of scrambling segments with their n-1 neighbours is that it limits the number of segments over which the data from a file is distributed, and this has advantage if the files are to be held in obscured format on the recipient's device as it reduces the time required to reconstruct a file from the scrambled data by reducing the amount of data that must be accessed. Also if only one file need be transferred across the network from a source directory, this reduces the number of segments that need be transferred to obtain the complete file.

Each segment 14- 19 is then given a filename and wrapped to make it look like a file.

Ideally the process that produces the filename uses an algorithm that results in a filename which is derived from the contents of the individual segment, so that any change in the contents of the segment in transfer will result in a changed filename if the algorithm is rerun. This provides a useful check that may be run at any point in the data transfer process to confirm data integrity.

Ideally, the process that wraps the segment and makes it look like a file produces a file that can be transferred using standard network protocols and will transfer easily across firewalls.

Ideally the process that produces the filename results in a filename that is difficult to distinguish from the filenames of other segments and that provides no clue or information that could assist unauthorised recreation of the original files or subdirectories 2 - 7 from the segments 14 - 19.

Ideally the process that makes the segment look like a file gives it a time and date of creation that is either identical to that of all other segment files, or provides no clue or information that could assist unauthorised recreation of the original files 2 - 7 from the segments 14 - 19.

In the example in Figure 2, the filename is generated using an MD5 process on the contents of the segment that produces a string of fixed length that may appear random unless there is prior knowledge of the process used. The value of the string will depend on the contents of the segment, so that if the contents are altered, running the MD5 algorithm will produce a string of a different value. Thus the MD5 provides a useful check that may be run at any point in the data transfer process to ensure that the contents of the segment are unaltered.

In the example in Figure 2, the segment is wrapped to make it look like an HTML file, with time and date of creation automatically set to some time and date chosen at random that is the same for all segments. Figure 2 shows the MD5 filename and time and date data for each segment 14 - 19.

Wrapping the segment in an HTML wrapper has the advantage that it can be transferred using standard HTTP protocols, which are supported by the majority of browsers in common use and by IP networks, and the sender, publisher and recipient software can be set to transfer segments across most firewalls. In certain circumstances where for example NT security is used, browsing across firewalls or through proxy servers is only allowed if the browser is able to demonstrate proof of identity. In these circumstances, the Client Software may use components of other software on the Client Device such as Internet Explorer to provide proof of identity and enable the Client Software to communicate. The implementation of this will be obvious to a person skilled in the art.

The segments 14 - 19 are then uploaded using standard methods that will be obvious to a person skilled in the art in apparently random order to the content server(s) 102 either directly or via the management server(s) 101. The order of the upload is defined by key(s) 23. The key(s) may be generated on the device that has created the uploaded segments from the original source directory, on another device local to this device, or on the management server or a key server associated with the management server. In Figure 2, segments are shown uploaded in order 14,19,18, 16. Appendix 2 shows a sample list of segment titles which illustrates the process differently. Specifically it shows a list of segment files in random order, which illustrates the difficulty of working out how to place those files back into the correct order.

Keys are ideally transferred between devices in the network 107 using secure protocols e.g. HTTPS. Prior to upload, the user and / or sending device may be authenticated by the management server. Optimal security will be provided by authenticating both user and device. There is much prior art in authentication, and the invention described here may be used with any appropriate form of authentication.

Ideally the order of the upload provides no information that may assist unauthorised recreation of the original files 2 - 7 from the uploaded files 14 - 19.

At some point, either before, during or after the upload process, the authorised recipients who may receive the data are identified.

Figure 3 illustrates the process whereby the segment files 14 - 19 in drawing 2 are placed onto content servers. This process is under control of the management servers(s). Each segment may be placed onto multiple servers. The segments may be split across multiple servers. Ideally, no one server contains all the information required to recreate a single dataset.

In the illustration in Figure 3, servers are configured in three groups, A, B and C. Each segment is placed on one server and then replicated on all the other servers in the same group for resilience and / or increased capacity. With reference to the illustration in drawing 2, when segments were 'scrambled in groups of n, such that n = 3 in the particular illustration, a method of obtaining higher security is to ensure that there are n groups of servers, such that each segment in a group of n is placed on a different group of servers. Thus without accessing a server from each different group it is impossible to collect all of the segments comprising a dataset.

To explain further and with reference to Figures 2 and 3, suppose 14 is the first segment file of a group of n segments such that n= 3. 14 is placed on a content server with the token A, such as 401, it will also be placed onto servers 405, 406 and 410 which all also have the token A. Likewise the second segment file in a group, say 15, could be placed onto servers 401, 403, 407 and 411 all having the token B, and the third segment file in the group, say 16, could be placed onto servers 404, 408, 409 and 412 all having the token C.

If lower security is required, all the segments may be placed on the same server, and alternate methods for distributing the segments across content servers may be utilised.

If the same identification method is used for all segments for all datasets distributed in this way, the result will be the obscuring of the dataset on the public internet, i.e. all segments for all datasets on the content servers have apparently random filenames such as MD5 names and are set to the same size and to the same time and date of creation. They are all equally available on the public intemet, and no mechanism is provided in this instance enabling them to be sorted. Thus it will be very difficult for an unauthorised person or computer program to select the segments that belong to a particular dataset from just this information.

The distribution of data is under control of the management server(s).

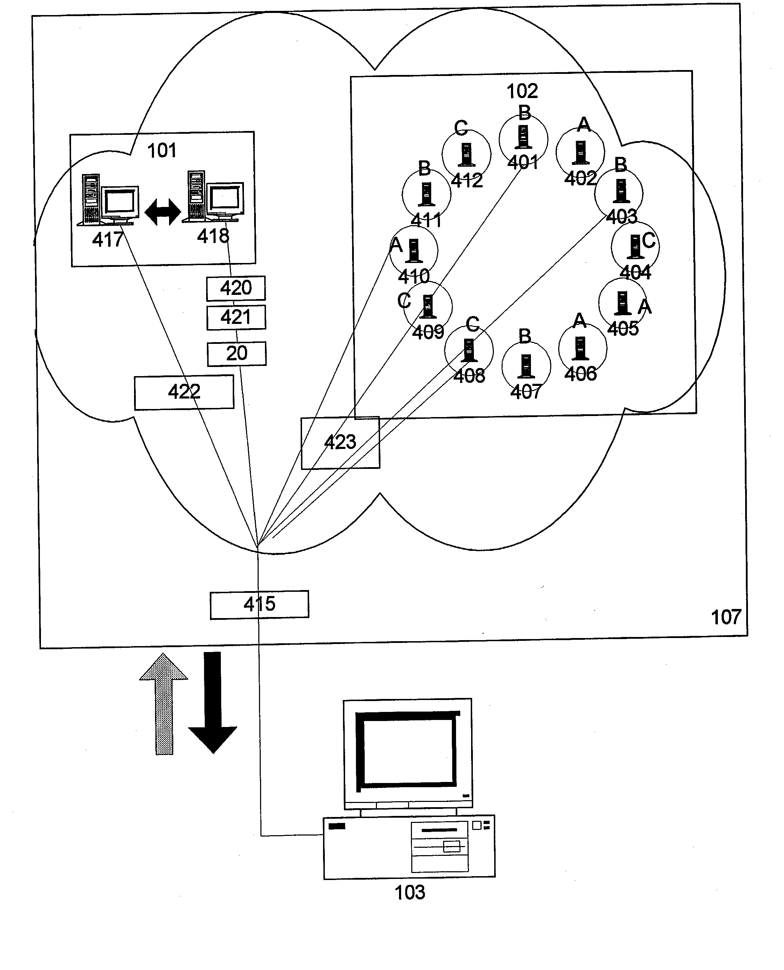

In Figure 4, the process whereby the recipient collects information is illustrated.

The user device 103 is connected via connection 415 to the network 107 which may be an IP network. Within the network 107 are located content server(s) 102 and management server(s) 101.

The management server functions may be split across multiple devices, in this example, 417 is a dedicated key server and 418 performs the other functions of the management servers. There is much prior art in key handling and secure management of user and other data. This invention may be used with any appropriate technology which can perform the required functions.

The Client Device 103 communicates with the management server(s) 101 to authenticate either its user, the Client Device 103 or both. The management server 101 holds management information and knows which datasets are to be delivered to the Client Device 103, either because the data is specifically intended for that device or because it is the nominated device of the intended recipient user. For each dataset, the management server delivers a 'pick list' 420 and a content server list 421. The management server may also deliver the directory structure file (20 in Figure 2).

The pick list 420 is a list of the filenames for the segment files required to recreate a dataset. For each segment file in the list, the list specifies either the address(es) of one or more servers holding the segment files or a server token. In the illustration in Figure 4, a segment file located and replicated on servers 402, 405, 406 and 410 could have the token A.

The order of the segment filenames in the pick list appears random and is unique to the user. This order is determined by one or more keys. These keys may be generated by the sender's device running the sending Client Software, by the management servers in which case they may be generated by a specialised key server, or they may be generated by the recipient Client Device 103. The keys may be fully or partially derived from data identifying the user or the Client Device hardware 103. The keys used for one dataset may be generated by more than one device or software program. This invention may be used with proprietary key handling technology, for which there is much prior art.

If server tokens are used in the pick list 420 they may be defined in a separate document, the content server list 421 or in the pick list. For each server token the addresses of servers holding the segment files with that token are listed. In the example illustrated in Figure 4, the content server list would point the user to servers 402, 405, 406 and 410 to find a segment file with token A, 403,407, 411 and 401 to find a segment file with token B, 404, 408, 409 and 412 to find a segment file with token C.

On or after receipt of the pick list 420 and content server list 421 the Client Software on the user device 103 starts to collect the segment files in the order in the pick list 420. It will be obvious to a person skilled in the art that the data collection method illustrated here is simply one of requesting web pages.

If a content server list 421 is used, if the Client Software is unable to locate a segment file on one of the indicated servers in the Content Server list 421, or if the servers are unavailable or busy, the Client Software can request a new content server list 421 from the management server(s) 101. Through this mechanism the content serving system can be easily expanded and adapted to deal with failure or rapid changes in demand for data. The mechanism in the event of either is to replicate the data on a content server across to another new server. This server is then included in content server lists in place of the server that has either failed or is congested when new content server lists are issued.

In the event that the Client Software on the Client Device 103 has multiple data sets to collect, the user may specify the collection order, or the sender / publisher may override the user specification in certain circumstances. Such a circumstance may arrive if for example a sales manager wishes to put his dataset to the top of the list of datasets awaiting delivery to the PC of his field sales person.

To initiate the whole process, a user on a user device will request information by clicking on an HTTP link in a web site, or in an e-mail or other document. This will initiate a process by which the Client Software is downloaded to the user device, and the Client Software will be pre-configured to communicate with the correct management server for the dataset. Alternately, the Client Software may be transferred to the user device via CD or other similar mechanism such as normal internet download, DVD or floppy disc or other such method.

Subsequently, the Client Software on the Client Device may be configured so that it regularly checks (say every two hours, or once every day at 2.00 am) with the management server to check if there is new information for it to collect. There will be new information, for example, if there is an update to information the Client has already collected, or if the publisher or sender has inserted a dataset into the Client's order list held on the management server or if the Client has ordered an additional data set by sending a message to the management server across the network. The implementation of this will be obvious to a person skilled in the art.

The Client Software must be instructed to check with the appropriate management server

A Client Device may have the Client Software configured to enable it to communicate with multiple independent management servers. In this event, the Client Software under user control and in collaboration with the relevant management servers will determine the order and timing of data collection.

The data collection method provides resilience in the event of other types of fault situation. In particular, if the network connection is broken for whatever reason, although the segment file that is in the process of collection may be lost no other data already collected will be lost, if this file segment is small relative to the size of the total dataset, the resulting data loss will be insignificant, and the Client Software can simply resume connection and continue with the data collection starting at the segment file during which collection failed. Thus the data collection process can be made robust and able to transfer large amounts of data over networks that are either prone to disconnects or where the failure rate of the network is such that there is a reasonable statistical probability that a disconnection will occur during transfer of a dataset of the size of the dataset in question.

Moreover, the Client Software can be set to a low priority on the Client Device such that it halts data transfer whenever either the Client Device or the network to which it is connected is busy. Data transfer can subsequently be resumed when the Client Device and / or network are no longer busy. If data transfer is halted at the end of transferring a data segment no data will be lost and there will be almost no increase in total data transfer time (although of course the elapsed transfer time will be increased). If data transfer is halted during the transfer of a segment file then the transfer of that segment file will fail, and there will be a certain loss of data and increase in total transfer time. If the size of the segment files is sufficiently small relative to the size of the total data set then the increase in data to be transferred and in time taken will be statistically irrelevant.

Moreover, the Client Software may be set to collect data at a particular time either under control of the management server or under control of the user or the local Client Software. For example the Client Software may profile activity on its Client Device and set transfer to a time when the Device is never normally in use. This mechanism also allows the management server to manage load on the networks to which the management and content servers are connected through controlling when clients connect to collect data.

If file segments are wrapped using HTTP protocols, then file segments below a certain size will be cached by network and proxy caches located on the network between the content server from which data is collected and the Client Device. Thus if multiple Client Devices connect to a content server via the same caches, then within a certain period of time set on the cache after the first Client Device has collected a segment file, that segment file may be collected from this cache rather than from the content server by other Client Devices which also have this segment file in their pick lists. This feature also results in a significant cost saving and is another reason, besides the use of standard web servers for serving data, why the implementation illustrated here provides a very low cost method for delivering large datasets across the public internet.

When the Client Software on the user device 103 has collected all of the segment files that comprise a dataset, there are several possible outcomes including but not limited to the following illustrations. At this point the data are obscured as a list of segment files in the memory of the user device 103 in apparently random order.

If a dataset comprises a single file the key or keys may be provided using a range of techniques of varying security including but not limited to those in common practice to enable the file to be reconstructed from the segment files by reversing the process that created them.

If a directory containing multiple files or subdirectories constitutes the dataset, then the directory description file is required. Using the same transfer mechanism as described above, or using HTTPS or other secure or non-secure transfer protocol, the directory description file may be transferred to the user device.

On receipt of the description file and keys and after its conversion from obscured format to original format if necessary, or after it has been read in obscured format through keys and on receipt of necessary keys, the whole dataset may be converted to its original format. The Software Client that reversed the obscuring process then accesses the description file to reconstruct the dataset as a directory with the correct subdirectories and files. How the data may be reconstructed from the file segments using the keys will be obvious to a person skilled in the art.

Alternately, on receipt of the description file and after its conversion from obscured format and on receipt of the necessary keys, individual files from the dataset may be converted to their original format while the remainder of the dataset remains obscured in the memory of the user device 103. If the files so revealed are not saved in their original format after viewing or access but cleared from memory then the data can remain in secure state on the user device, so that unauthorised access is prevented.

This invention may be extended to provide a method for digital rights management (DRM) that ensures that media on the Client Device may only be accessed given authorisation by the Copyright owner or other duly authorised body or person.

In this method, a custom player is used which can play the media file(s) directly from the segment files (as illustrated by items 14 - 19 in Figure 1) stored in pick list order on the Client Device using the key(s). This method may be implemented so that the original media file need never be revealed in native format. The keys may be linked to characteristics of the Client Device which are either unique or which enable it to be differentiated with reasonable statistical confidence from other Devices using the network and which are read either before the media is played or while it is played. In this case, the copyright of the media is protected as it is unlikely that the data on the Client Device can be played on another User Device. In this case, the receipt of keys may be tied to payment, user and / or device authentication or other requirement placed on the end-user. Similarly, access to the data may also be restricted to a certain time window or to a number of plays.

In a further extension of this invention, a dataset 1 may be converted into segment files 14 - 19. These segment files may be shuffled into an order defined by a key. Some segment files may be removed from set of segment files and the remainder are then stored on a CD in the shuffled order. The CD may be replicated. When a CD is run by the Client Device, the file segments are transferred to read / write memory on the Client Device and the Client Software or a specialised player communicates with the management server(s) 101. The management server(s) provide the missing segment files using the inventive data transfer techniques with instructions indicating how these additional segment files are to be inserted among the segment files delivered on CD. The particular insertion instructions are unique to each recipient of the data, and thus this method ensures that each recipient has a unique copy of the original dataset. The resulting dataset may then be accessed using any of the methods described above.

In a further extension of this invention, software may be delivered securely either on CD or across the network as described above. With the software still in secure format, a custom installer will on receipt of the correct keys, which may be tied to the user or Client Device, install the majority of the software components onto the Client Device without revealing the installation files in native format and perform registration functions.

In a further extension of the application of the invention to software delivery, some core components of the software are not delivered in the standard format which is common to all deliveries, but are recompiled for each Client Device. Prior to compilation the Client Software profiles the Client Device and provides the compiling software on the compilation server with information that enables the Client Device to be uniquely identified or identified within a reasonable statistical probability of uniqueness. This information is used in compiling the core components for the Client Device such that these components will not run or will not with reasonable statistical probability run on any device onto which they are placed other than the correct Client Device.

Likewise for media delivery with DRM, the custom media player may be compiled for each Client Device such that it will only work on the correct Client Device.

In a further extension of the invention, it may enable a copy of a dataset to be kept in synchronisation with the master copy of the dataset as it is upgraded. When a new version of the dataset is released or published, the files that have been changed or added are transferred as a dataset to the Client Device using the mechanism described above. The description file shown in Appendix 1 for the upgrade dataset indicates exactly where in the data structure the files in the upgrade belong in the original data structure, and in particular indicates where existing files are superseded by files in the upgrade. A separate Deletion List (which may be appended to the description file) indicates which files have been deleted from the original dataset in the master copy.

If the original dataset has been converted to native format from obscured format on the Client Device, then the upgrade may be executed using the following mechanism. New files are inserted in the correct place in the existing data structure. Existing files are overwritten where appropriate new versions have been delivered. Files indicated for deletion in the Deletion List are removed from the Client copy of the dataset.

If the original dataset has been kept in obscured format on the Client Device, the Client copy of the description file is modified using the information from the description file for the upgrade dataset and the Deletion List so that it describes the new version of the data. It will include information defining where to find the obscured data for each subdirectory and file in the new version of the dataset, and will in a way that is apparently seamless to the user pull information from both the original and upgrade datasets to display the new version of the data when provided with the necessary keys. Both the original version of the data and the upgrade may require different keys. The Client Software may run a utility on the deletion list that removes segment files which are no longer required as they contain only data from files which are in the deletion list.

This method may be extended to further subsequent upgrades of the original dataset, with no limit on the number of upgrades inherent in the mechanism described here.

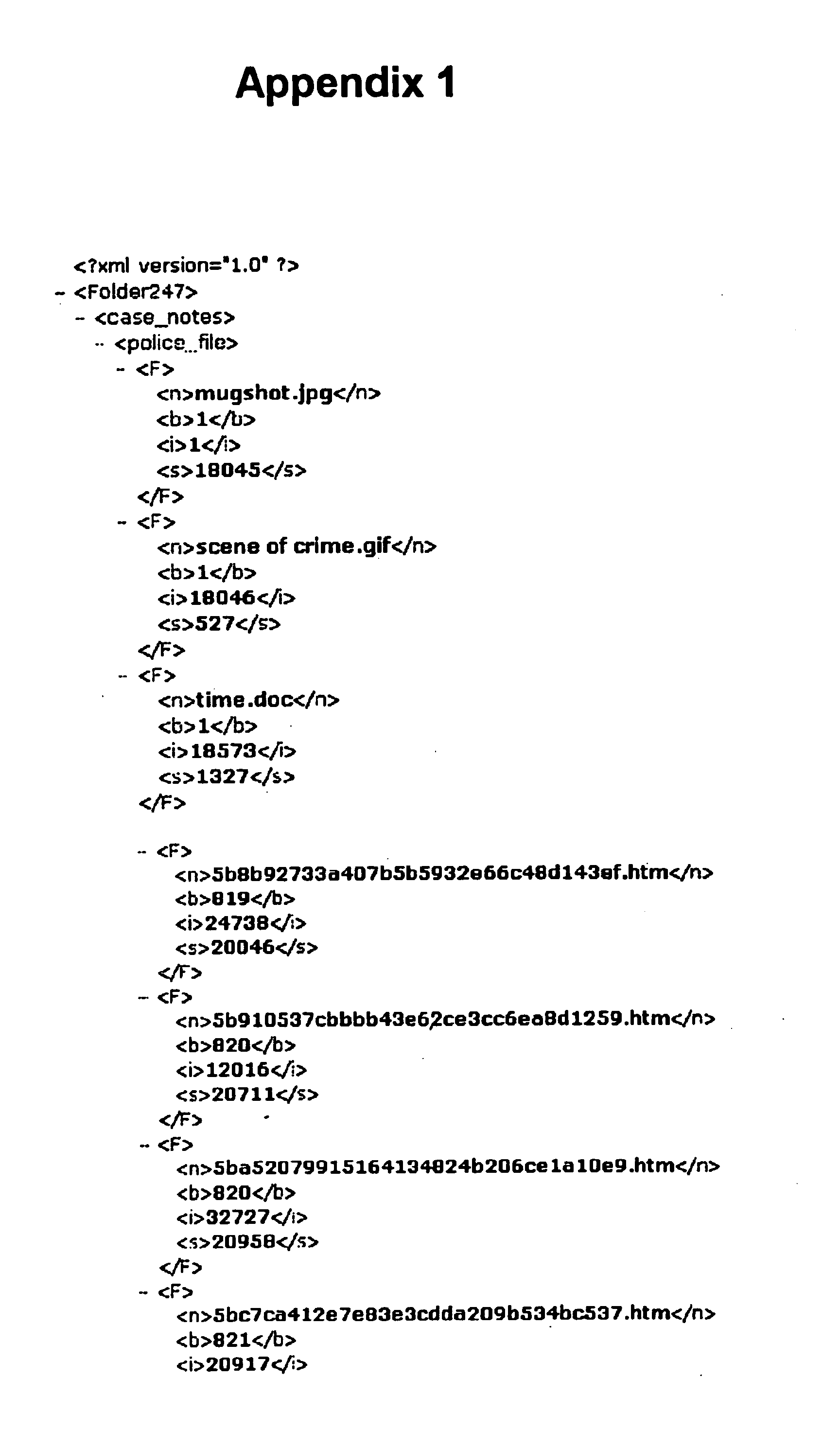

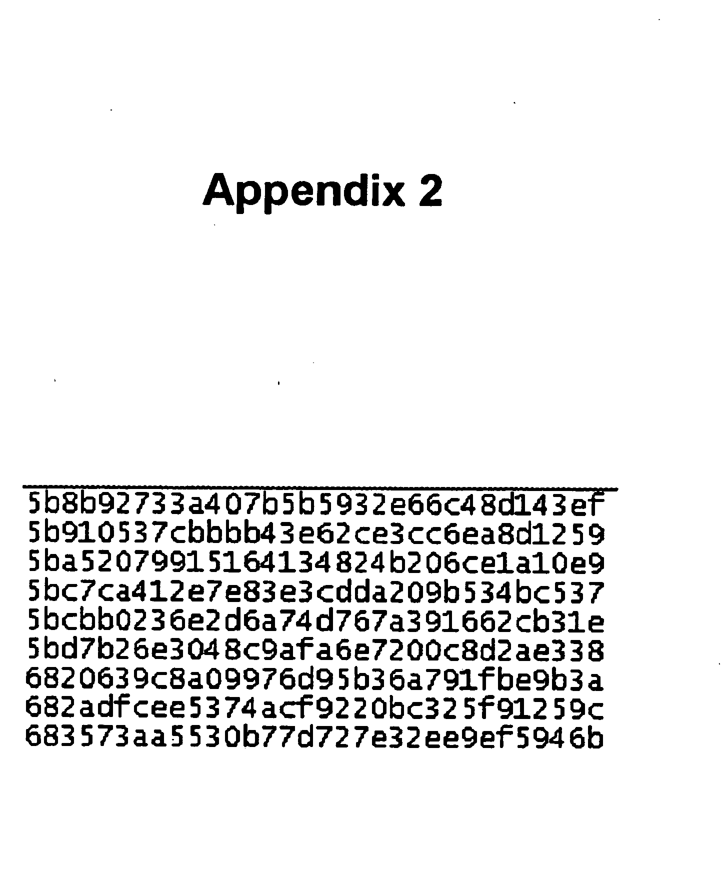

## Claims

1. A method of preparing a dataset for secure transmission over a communications network, comprising the steps of:
scrambling the dataset according to a first key;
splitting the dataset into a plurality of blocks; and
ordering the blocks according to a second key.

2. A method according to claim 1, wherein the dataset is split into the plurality of blocks before or after the scrambling process.

3. A method according to claim 1, wherein the dataset is split into the plurality of blocks during the scrambling process.

4. A method according to claim 3, wherein the scrambling process comprises the steps of:
splitting the dataset into a plurality of segments;
grouping sets of segments; and,
forming blocks corresponding to the groups of segments, wherein each block includes data from every segment in the corresponding group.

5. A method according to any preceding claim, wherein the dataset includes a plurality of files, further comprising the step of augmenting the dataset to include information that defines how each file may be extracted from the dataset.

6. A method according to any preceding claim, wherein the dataset is a directory, further comprising the step of generating a description of the directory structure prior to scrambling.

7. A method according to any preceding claim, further comprising the step of configuring each block of data according to a protocol to make it look like a file.

8. A method according to claim 7, wherein each block of data is configured such that it can be served by a standard web server.

9. A method according to any preceding claim, further comprising the step of labelling each block with an identical time and date of creation.

10. A method according to any preceding claim, further comprising the step of giving each block a file name derived partially or fully from the contents of the block.

11. A method according to any preceding claim, wherein the blocks are uploaded to a plurality of servers such that no one server contains the entire dataset.

12. A computer program product comprising computer program code means adapted to perform all of the steps of any of the preceding claims when said program is run on a computer.

13. A computer program according to claim 12 embodied on a computer readable medium.

14. A system for preparing a dataset for secure transmission over a communications network, comprising:
means for scrambling the dataset according to a first key;
means for splitting the dataset into a plurality of blocks; and
means for uploading the blocks in a different order according to a second key.

15. A system according to claim 14, wherein the dataset comprises a plurality of files, further comprising means for augmenting the dataset to include information that defines how each file may be extracted from the dataset.

16. A system according to claim 14 or 15, wherein the dataset is a directory, further comprising means for generating a description of the directory structure prior to scrambling.

17. A system according to claim 14, 15 or 16, further comprising means for wrapping each block of data in an alternative protocol to make it look like a file.

18. A system according to any one of claims 14 to 17, further comprising means to give each block a file name derived partially or fully from the contents of the block.

19. A system according to any one of claims 14 to 18, further comprising means for uploading the blocks to a plurality of servers such that no one server contains the entire dataset.

20. A method of transferring a dataset, comprising a plurality of blocks of data across a communications network from one or more servers to a client device, comprising the steps of:
downloading the blocks to the client device in an order according to a download key or keys;
independently sending the download key or keys to the client device; and,
reordering the blocks in accordance with the key or keys.

21. A method according to claim 20, wherein at least one download key is unique to the client device or a user of the client device.

22. A method according to claim 21, wherein the download key is fully or partially derived from data identifying the client device hardware.

23. A method according to claim 20, 21 or 22, wherein the dataset is scrambled according to a further key or keys, and the further key or keys are independently sent to the client device.

24. A method according to claim 23, wherein the dataset is prepared according to any one of claims 1-10, further comprising the step of unscrambling the data set in accordance with the first and second keys.

25. A method according to claim 24, wherein the dataset is stored on the client device in scrambled form and is unscrambled when accessed by a user with the first key.

26. A method according to claim 25, wherein portions of the dataset may be unscrambled whilst the remainder of the dataset remains scrambled.

27. A method according to any one of claims 20-26, wherein the data is software.

28. A method according to any one of claims 20-27, wherein the dataset is formed from a plurality of portions of a larger dataset, and wherein the method further includes the step of recombining the dataset with the remainder of the larger dataset on the client device.

29. A method according to any one of claims 20-27, wherein the dataset is an update to an existing client dataset, and wherein a description file is provided which indicates where the updates fit into the existing dataset.

30. A computer program product comprising computer program code means adapted to perform all of the steps of any one of claims 20-29 when said program is run on a computer network.

31. A computer program according to claim 30 embodied on a computer readable medium.

32. A system for transferring a dataset, comprising a plurality of blocks of data across a communications network from one or more servers to a client device, comprising:
means for downloading the blocks to the client device in an order according to a download key or keys;
means for independently sending the download key or keys to the client device; and,
means for reordering the blocks in accordance with the key or keys.

33. A system according to claim 32, wherein at least one download key is unique to the client device or a user of the client device.

34. A system according to claim 32 or 33, further comprising the features of any one of claims 14-19.

35. An encrypted dataset derived from an original dataset, comprising a plurality of blocks of data ordered according to a second key, wherein each block contains data from the original dataset in accordance with a first key.
